Europäisches Patentamt

European Patent Office

Office européen des brevets

(11) Veröffentlichungsnummer: **0 301 436 B1**

## EUROPÄISCHE PATENTSCHRIFT

(45) Veröffentlichungstag der Patentschrift: **03.06.92**

(51) Int. Cl.⁵: **H02M 7/06**, H02M 3/335, F02P 3/08

(21) Anmeldenummer: **88111859.0**

(22) Anmeldetag: **22.07.88**

(54) **Gleichspannungswandler.**

(30) Priorität: **24.07.87 DE 3724590**

(43) Veröffentlichungstag der Anmeldung:
**01.02.89 Patentblatt 89/05**

(45) Bekanntmachung des Hinweises auf die
Patenterteilung:
**03.06.92 Patentblatt 92/23**

(84) Benannte Vertragsstaaten:
**DE FR GB IT SE**

(56) Entgegenhaltungen:
DE-A- 3 535 365
US-A- 3 324 378

WIRELESS WORLD, Band 85, Nr. 1522, Juni
1979, Seite 91, London, GB; D.D. WILLIAMS:
"Single switch doubles bridge voltage"

PATENT ABSTRACTS OF JAPAN, Band 4, Nr.
148 (E-30)[630], 18. Oktober 1980, Seite 117 E
30; JP-A-55 100 066 (NIPPON DENKI K.K.)
30-07-1980

(73) Patentinhaber: **Niggemeyer, Gert Günther**
**Steinbecker Mühlenweg 95**
**W-2110 Buchholz i.d.N.(DE)**

(72) Erfinder: **Niggemeyer, Gert Günther**
**Steinbecker Mühlenweg 95**
**W-2110 Buchholz i.d.N.(DE)**

(74) Vertreter: **Patentanwälte Grünecker, Kinkel-**
**dey, Stockmair & Partner**
**Maximilianstrasse 58**
**W-8000 München 22(DE)**

## Beschreibung

Die Erfindung bezieht sich auf einen Gleichspannungswandler der im Oberbegriff des Patentanspruchs 1 genannten Art.

Ein solcher, aus der DE-OS 35 35 365 bekannter Gleichspannungswandler wird zur Speisung eines Hochspannungs-Kondensator-Zündgerätes für Brennkraftmaschinen benutzt. Der Impulsgenerator des Gleichspannungswandlers wird von einem Impulsbreiten-Modulator angesteuert und weist zwei auf getrennte Primärwicklungen wirkende Leistungstransistoren auf. Dieser bekannte Gleichspannungswandler arbeitet daher im Gegentaktbetrieb. Der mit der Sekundärwicklung verbundene Brückengleichrichter liefert eine durch Zweiweg-Gleichrichtung gebildete hohe Gleichspannung an einen den Ladekondensator bildenden Zündkondensator.

Wird bei einem solchen Hochspannungs-Kondensator-Zündgerät die Funkenarbeit verstärkt und auch gleichzeitig die maximale Funkenfrequenz erhöht, so wird in dem Kondensator-Zündgerät erheblich mehr Leistung durchgesetzt, wodurch auch entsprechend mehr Verlustwärme anfällt, die abgeführt werden muß. Werden derartige Kondensator-Zündgeräte mit möglichst kleinen Abmessungen in entsprechend kleinen Gehäusen untergebracht, so wird die Abführung dieser Verlustwärme problematisch.

Bei einem solchen Kondensator-Zündgerät lädt der Gleichspannungswandler den Ladekondensator periodisch im Takte der geforderten Funkenfolge jedesmal von Null Potential auf eine bestimmte Ladespannung auf. Der entladene Ladekondensator stellt dabei zunächst einen Kurzschluß für den Gleichspannungswandler dar, wonach er mit steigender Ladespannung den Gleichspannungswandler weniger belastet, da der durch den Ladekondensator gegebene Belastungswiderstand größer wird und damit die Fehlanpassung zwischen Gleichspannungswandler und Belastungswiderstand geringer wird.

Mit steigender Funkenfrequenz nimmt die Ladespannung des Ladekondensators ab. Bei einem großen Übersetzungsverhältnis von etwa 25 des Transformators des Gleichspannungswandlers beeinträchtigt die ständige Fehlanpassung zwischen Belastungswiderstand und Gleichspannungswandler auch den Wirkungsgrad des Gleichspannungswandlers, so daß dieser geringer wird. In der Praxis haben sorgfältig dimensionierte Kondensator-Zündgeräte bei geringer Leistung einen Wirkungsgrad von nur 45 %, der bei maximaler Funkenfrequenz und Funkenarbeit um ein gutes Drittel, nämlich bis unter 30 % abfällt. Ein geringer Wirkungsgrad bei hoher Leistung führt aber zu einer entsprechend großen Verlustwärme, was wiederum die erreichbare Leistung des Kondensator-Zündgerätes begrenzt und die Speisequelle eines Bordnetzes unnötig belastet.

Aufgabe der Erfindung ist es, einen Gleichspannungswandler der im Oberbegriff des Patentanspruchs 1 genannten Art so weiterzubilden, daß dieser mit einer änderbaren Anpassung an den sich ändernden Belastungswiderstand des Ladekondensat-rs arbeiten kann, um seinen Wirkungsgrad zu erhöhen.

Bei einem Gleichspannungswandler der genannten Art ist diese Aufgabe durch die im kennzeichnenden Teil des Patentanspruchs 1 angegebenen Merkmale gelöst.

Der erfindungsgemäße Gleichspannungswandler zeichnet sich dadurch aus, daß er in für sich bekannter Weise im Eintaktbetrieb arbeitet und die mit dem Brückengleichrichter verbundene Sekundärwicklung des Transformators auch zu dessen Entmagnetisierung mitbenutzt, wodurch der bei der Entmagnetisierung entstehende Spannungsimpuls ebenfalls zur Aufladung des Ladekondensators ausgenutzt wird. Allein durch diese erfindungsgemäße erste Maßnahme ist das rechnerische übersetzungsverhältnis zwischen Primär-und Sekundärwicklung des Transformators um den Faktor 2,4 zu vergrößern. Außerdem wird durch die Verbindung eines Anschlusses der Sekudärwicklung über einen ondensator mit einem Schaltpunkt niedrigen Potentials bzw. dem Minuspol des Brückengleichrichters eine nochmalige Vergrößerung des übersetzungsverhältnisses um den Faktor 1,75 erreicht. Beide erfindungsgemäßen Maßnahmen ergeben daher eine Vergrößerung des übersetzungsverhältnisses um einen Gesamtfaktor von ca. 4,2. Da zu Beginn der Aufladung des Ladekondensators, wenn dieser also praktisch einen Kurzschluß am Ausgang des Brückengleichrichters darstellt, im wesentlichen allein das durch das Windungsverhältnis gegebene übersetzungsverhältnis des Transformators wirksam ist, wird die Anpassung an den durch den Ladekondensator gegebenen Belastungswiderstand des Brückengleichrichters verbessert. Da anschließend bei steigender Ladespannung am Ladekondensator das übersetzungsverhältnis um die vorstehend genannten Faktoren kontinuierlich, d.h. gleitend, vergrößert wird, erfolgt in diesem Bereich ebenfalls eine gute Anpassung an den laufend ansteigenden Belastungswiderstand des Brückengleichrichters.

Außerdem kann durch diese um die genannten Faktoren erreichte Vergrößerung des übersetzungsverhältnisses eine erhebliche Vergrößerung der Ladespannung am Ladekondensator erreicht werden, die insbesondere dann ausgenutzt werden kann, wenn an der Primärseite des Gleichspannungswandlers nur relativ niedrige Speisespannungen zur Verfügung stehen.

Aus der Zeitschrift WIRELESS WORLD, Band 85, Nr. 1522, Juni 1979, Seite 21, London, GB, ist eine Brückengleichrichterschaltung bekannt, bei der ein Brükkengleichrichter einen Ladekondensator speist. Der eine mit der Sekundärwicklung eines Transformators verbundene Eingang des Brükkengleichrichters ist über einen Kondensator und einen mit diesem in Reihe geschalteten Schalter mit Masse verbunden. Der Transformator wird mit einer sinusförmigen Wechselspannung gespeist. Liegt dieser eine mit der Sekundärwicklung des Transformators verbundene Anschluß des Brückengleichrichters auf positivem Potential gegenüber dem anderen mit dem Brückengleichrichter verbundenen Anschluß der Sekundärwicklung, so wird der Kondensator über die eine Diode aufgeladen, während der Ladekondensator über die andere Diode des Brückengleichrichters aufgeladen wird, wenn der andere mit dem Brükkengleichrichter verbundene Anschluß der Sekundärwicklung gegenüber dem einen Anschluß positiv ist. Der Kondensator wird daher auf den Spitzenwert der Wechselspannung aufgeladen, während der Ladekondensator auf den doppelten Wert dieser Spitzenspannung aufgeladen wird. Die beiden anderen Dioden des Brückengleichrichters sind beide in Sperrrichtung vorgespannt und leiten daher nicht. Dem Kondensator ist ein Widerstand parallel geschaltet, der diesen entlädt, wenn der Schalter geöffnet ist. Würde man diese bekannte Brückengleichrichterschaltung mit Rechteckimpulsen wechselnder Polarität speisen, so würde die einseitige kapazitive Belastung einen der Leistungstransistoren eines die Rechteckimpulse erzeugenden Gegentaktwandlers zerstören. Würde der Kondensator eine nur kleine Kapazität haben, so würde bei der asymmetrischen Belastung des normalerweise auf Symmetrie ausgelegten Gegentaktwandlers dessen ohnehin niedriger Wirkungsgrad nur noch weiter verringert. Bei der bekannten Schaltung hat der Kondensator die gleiche Kapazität wie der Ladekondensator und eine Verkleinerung der Kapazität des Kondensators würde zu einer unerwünschten Leistungsbegrenzung führen. Diese bekannte Schaltung kann daher bei Nennleistung nur die doppelte Spannung zur Verfügung stellen, wobei jedoch nur der halbe Strom fließt.

Aus der JP-A-55-10 00 66 ist ein Gleichspannungswandler bekannt, der eine mit der Sekundärwicklung des Transformators verbundene Gleichrichterschaltung aus sechs Dioden aufweist. Die Gleichrichterschaltung arbeitet über eine Induktivität auf einen Ladekondensator und eine diesem parallel geschaltete Last. In dem Diodennetzwerk ist ein weiterer Kondensator vorgesehen, dessen Anschlüsse jedoch jeweils über Dioden mit den Anschlüssen der Sekundärwicklung des Transformators verbunden sind. Mit Hilfe dieses zusätzlichen Kondensators soll die in dem Transformator gespeicherte Erregungsenergie an die Belastung abgegeben werden.

Aus der US-PS 3 324 378 ist ein Gleichspannungswandler bekannt, bei dem der Sekundärwicklung des Transformators ein Kondensator parallel geschaltet ist, dessen Kapazität so gewählt ist, daß er mit der Sekundärwicklung einen auf Resonanz abgestimmten Schwingkreis bildet. Der Ausgang der Gleichrichterbrücke dieses bekannten Gleichspannungswandlers ist mit einem Schalttransistor beschaltet, der in bestimmter Weise gesteuert wird, um eine regelbare Ausgangsspannung abzugeben.

Weitere Ausgestaltungen der Erfindung sind in den Unteransprüchen angegeben.

Ausführungsbeispiele der Erfindung werden anhand der Zeichnung erläutert. Im einzelnen zeigt:

Fig. 1

ein erstes bevorzugtes Ausführungsbeispiel des Gleichspannungswandlers in Verbindung mit einem Hochspannungskondensator-Zündgerät, wie es aus der eingangs genannten DE-OS 35 35 365 bekannt ist,

Fig. 2, 3 und 4

abgewandelte Ausführungsbeispiele des Gleichspannungswandlers,

Fig. 5

den zeitlichen Verlauf der am Ladekondensator auftretenden Ladespannung mit unterschiedlichen Kapazitätswerten als Parameter und

Fig. 6

die am Ladekondensator erreichbaren Ladespannungen in Abhängigkeit von der an der Primärseite des Gleichspannungswandlers liegenden Speisespannung mit dem rechnerischen Übersetzungsverhältnis des Transformators als Parameter.

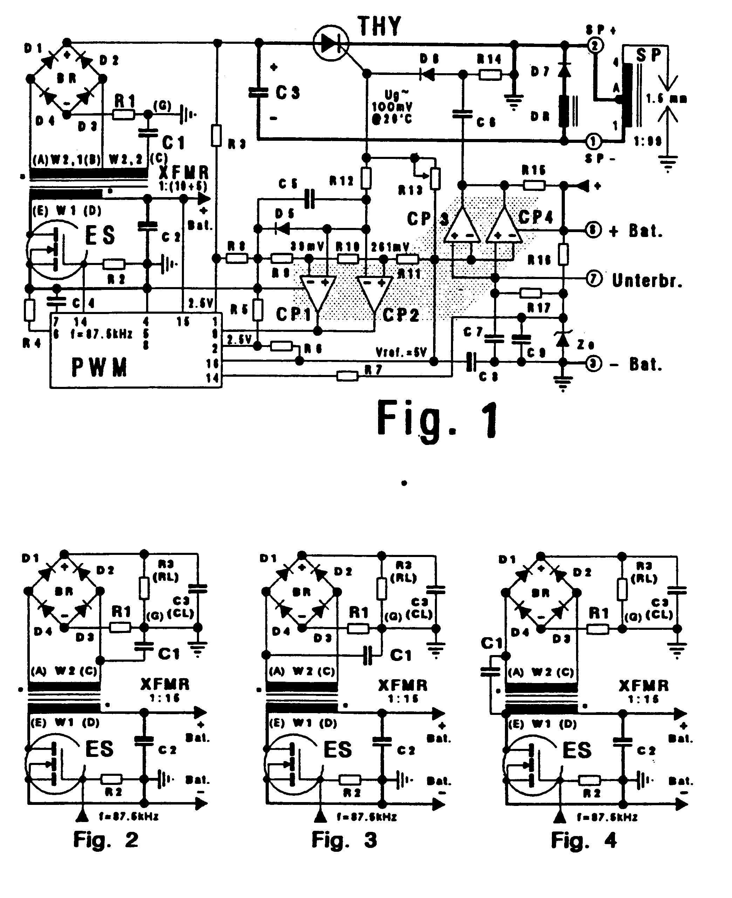

Das in Fig. 1 in Verbindung mit einer bevorzugten Ausführungsform des Gleichspannungswandlers gezeigte Hochspannungs-Kondensator-Zündgerät ist in der genannten DE-OS 35 35 365 im einzelnen ausführlich beschrieben, so daß hier nur kurz auf die für die Ausbildung des Gleichspannungswandlers relevanten Bauteile eingegangen wird.

Der Gleichspannungswandler umfaßt einen hier nicht näher gestellten elektronischen Schalter ES, der von einem Impulsbreiten-Modulator angesteuert wird, um die Primärwicklung W1 eines Transformators XFMR impulsmäßig zu speisen, wobei dieses hier im Eintaktbetrieb erfolgt. Die Sekundärwicklung des Transformators ist in eine erste Sekundärwicklung W2,1 und eine zweite Sekundärwicklung W2,2 durch einen Anzapfungs-Anschluß B unterteilt. Die Anschlüsse A und B der ersten Sekundärwicklung W2,1 sind mit einem vier Dioden D1, D2, D3 und D4 aufweisenden Brückengleichrichter verbunden. Der freie Anschluß der zweiten Sekundärwicklung W2,2 ist über einen Kondensator C1 mit Erde verbunden. Der Minus-Potential führende Gleichspannungsanschluß (-) des Brückengleichrichters ist über einen Widerstand R1 ebenfalls mit Erde verbunden. Der Plus-Potential führende Gleichspannungsanschluß (+) des Brückengleichrichters ist mit einem Zündkondensator C3 verbunden, der für den Gleichspannungswandler als Ladekondensator wirkt. Dieser wird dabei über eine Parallelschaltung aus der Primärseite einer Zündspule SP und einer aus einer Drossel DR und einer Diode D7 gebildeten Reihenschaltung, die mit Erde verbunden ist, aufgeladen. Dem Zündkondensator C3 ist ein hier als Teilerwiderstand der Spannungsregelung wirkender Lastwiderstand R3 parallel geschaltet.

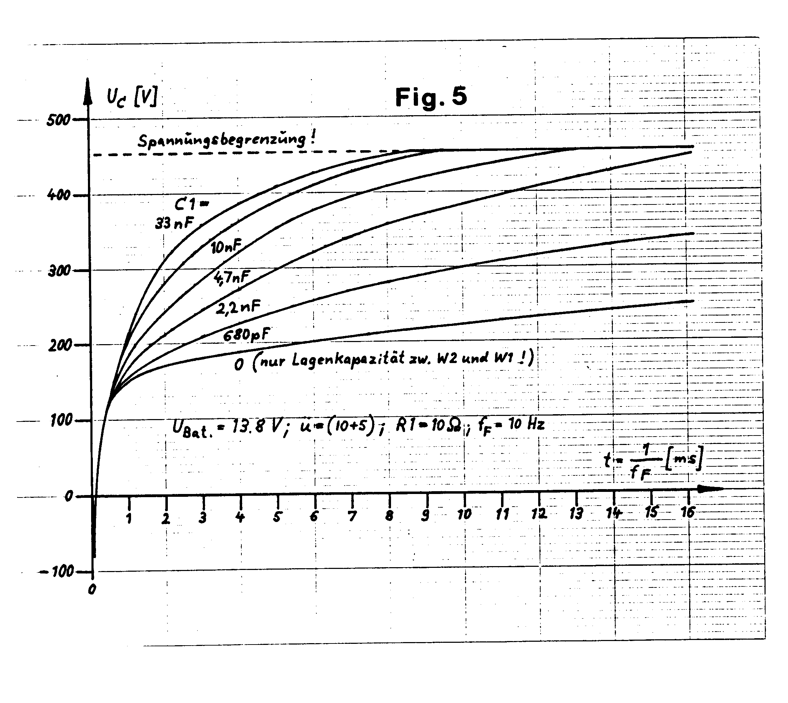

Da der im wesentlichen durch den intermittierend leitend geschalteten elektronischen Schalter ES gebildete Impulsgenerator einen Eintaktbetrieb des Gleichspannungswandlers bewirkt, ist nur eine Primärwicklung W1 vorgesehen, so daß eine Entmagnetisierung des Transformators XFMR über die erste Sekundärwicklung W2,1 und den mit ihr verbundenen Brückengleichrichter BR erfolgt. Die dabei durch die Entmagnetisierung entstehenden Impulse laden über die Dioden D2 und D4 der Brückenschaltung BR den Ladekondensator C3 zusätzlich auf. Allein dieses bewirkt eine Vergrößerung des durch die Windungszahlen des Transformators bedingten rechnerischen Übersetzungsverhältnisses um den Faktor 2,4. Bei dem in Fig. 1 gezeigten bevorzugten Ausführungsbeispiel des Gleichspannungswandlers hat die erste Sekundärwicklung W2,1 die doppelte Windungszahl wie die zweite Sekundärwicklung W2,2. Die Übersetzungsverhältnisse zur Primärwicklung W1 sind mit 1:10 und 1:5 gewählt, so daß das rechnerische Gesamt-Übersetzungsverhältnis von Primärseite zu Sekundärseite 1:(10+5) beträgt. Für dieses Übersetzungsverhältnis wurden die in Fig. 5 dargestellten Aufladekurven für den Ladekondensator C3 ermittelt, wobei eine Funkenfrequenz des Zündgerätes von 10 Hz benutzt wurde.

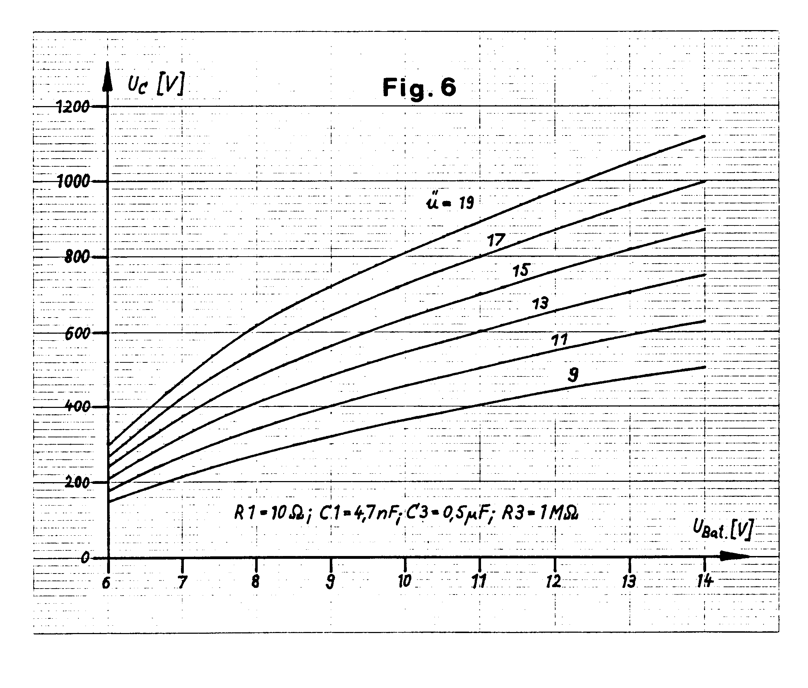

Wie der in Fig. 6 gezeigten Kurve für die maximalen Ladespannungen in Abhängigkeit von der primärseitigen Speisespannung $U_{Bat}$ zu entnehmen ist, ergibt sich bei einer Batteriespannung $U_{Bat}$ = 7V als Speisespannung an der Primärseite des Gleichspannungswandlers eine Ladespannung am Kondensator von ca. 370 Volt, wenn eine geeignete Kapazität für den Kondensator C1 gewählt wird. Bei einem Kondensator-Zündgerät ist damit selbst im strengsten Winter mit entsprechend niedriger Batteriespannung immer noch ein ausreichender Zündfunke zu erzeugen, um eine Brennkraftmaschine anzulassen.

Der zwischen dem Minus-Potential führenden Gleichspannungsausgang des Brückengleichrichters BR und Erde geschaltete niederohmige Widerstand R1 begrenzt die maximalen Aufladestromimpulse für den Ladekondensator und schützt die Dioden des Brückengleichrichters. Mit diesem Widerstand R1 wird bei höherer Leistung des Gleichspannungswandlers parasitäre und damit störende Hochfrequenz bedämpft, wodurch der Wirkungsgrad des Gleichspannungswandlers weiter zu erhöhen ist.

Für die in Fig. 5 gezeigten Ladekurven ist es dabei wichtig, daß die Sekundärwicklung, wie in Fig. 1 gezeigt, in zwei Sekundärwicklungen unterteilt ist, um die Anpassung des Ausgangs des Gleichspannungswandlers an den durch den Ladekondensator jeweils gegebenen Belastungswiderstand weiter zu optimieren. Dabei ist jedoch darauf hinzuweisen, daß die erste Sekundärwicklung W2,1 ein Übersetzungsverhältnis von 1:10 nicht wesentlich unterschreiten soll, um eine Überlastung der Dioden des Brückengleichrichters zu vermeiden.

Zur Ermittlung der maximal erreichbaren Ladespannung am Ladekondensator C3 wird von dem rechnerischen Gesamt-Übersetzungsverhältnis von ü = 15 ausgegangen. Da der in Fig. 1 gezeigte Kondensator C1 innerhalb des Gleichspannungswandlers als ein "Booster"-Kondensator wirkt, der eine Vergrößerung des rechnerischen Übersetzungsverhältnisses um einen Faktor von etwa 1,75 bewirkt, ergibt sich ein Gesamt-Vergrößerungsfaktor von etwa 4,2 für das rechnerische Übersetzungsverhältnis des Transformators. Bei einer Speisespannung von 13,8 Volt an der Primärseite des Gleichspannungswandlers ergibt sich damit eine maximale Ladespannung von ca. 860 Volt am Ladekondensator C3 (13,8 x 15 x 4,2 = 869,4). Diese berechnete Ladespannung ist auch den in Fig. 6 gezeigten Kurven für die maximalen Ladespannungen zu entnehmen. Für die in Fig. 6 gezeigten Kurven der maximalen Ladespannungen ist es dabei unerheblich, ob die Sekundärwicklung in zwei Sekundärwicklungen unterteilt ist oder nicht. Bei der Anwendung des Gleichspannungswandlers in einem Hochspannungs-Kondensator-Zündgerät, wie es z.B. in Fig. 1 dargestellt ist, ist in diesem Fall selbstverständlich eine Spannungsbegrenzung der genannten Maximalspannung erforderlich, um eine Beschädigung des Zündkondensators, Thyristors und anderer Bauteile des Zündgerätes zu vermeiden. Bei dem in Fig. 1 gezeigten Zündgerät erfolgt diese Spannungsbegrenzung über den Impulsbreiten-Modulator PWM.

Für andere Anwendungen des Gleichspannungswandlers, wie z.B. einen sogenannten Solarbatterie-Betrieb, bei dem dem Gleichspannungswandler primärseitig eine sehr niedrige Ausgangsspannung einer Solarzelle zugeführt wird, um eine sekundärseitig an dem Gleichspannungswandler angeschlossene Batterie aufzuladen, ist dieses hohe Übersetzungsverhältnis zwischen primärseitiger Speisespannung und sekundärseitiger Ladespannung am Ladekondensator dagegen mit Vorteil voll auszunutzen. Auch zur Erzeugung der zur Speisung von Gasentladungslampen benötigten Hochspannung ist der Gleichspannungswandler hervorragend geeignet.

Da eine synchrone Anpassung des Ausgangswiderstandes des Gleichspannungswandlers, bzw. des Übersetzungsverhältnisses des Transformators an die sich ändernde Belastung durch den Ladekondensator nicht möglich ist, bietet die Unterteilung der Sekundärwicklung des Transformators in die erste und zweite Sekundärwicklung mit unterschiedlichen Übersetzungsverhältnisses eine gute Näherungslösung für diese Anpassung. Bei dem in Fig. 1 gezeigten Ausführungsbeispiel des Gleichspannungswandlers wird der Ladekondensator C3 zunächst mit dem niedrigen Übersetzungsverhältnis W2,1/W1 von vorzugsweise ü = 10 aufgeladen. Das bedeutet, daß der Gleichspannungswandler in der Anfangsphase des Ladevorganges zunächst nur mit ca. 1/6 der Belastung eines herkömmlich ausgebildeten Gleichspannungswandlers belastet wird. Im weiteren Ladeverlauf des Ladekondensators folgt dann die Ladespannung den in Fig. 5 gezeigten Kurven. Diese Kurven unterscheiden sich dabei in Abhängigkeit von dem jeweils gewählten Kapazitätswert für den Kondensator C1. Wie aus Fig. 5 deutlich zu erkennen ist, haben alle Kurven zunächst den gleich steilen Spannungsanstieg bis zu einem gemeinsamen "Schwenkpunkt", der nach ca. 0,6 ms mit einer Ladespannung UC von ca. 160 Volt erreicht wird. Bis zu diesem "Schwenkpunkt" ist nur das niedrige rechnerische Übersetzungsverhältnis W 2,1/W1 mit ü = 10 wirksam, wonach das Übersetzungsverhältnis dann kontinuierlich ansteigt. Man erreicht also eine mehrfach abgestufte Aufladung, wobei schließlich bei einem rechnerischen Gesamt-Übersetzungsverhältnis von ü = 15 ein tatsächlich wirksames Übersetzungsverhältnis von ca. ü = 60 erreicht wird, was eine Spannungsvervierfachung am Ausgang des Gleichspannungswandlers gegenüber der Ausgangsspannung eines herkömmlichen Gleichspannungswandlers bedeutet, die allein durch das rechnerische Übersetzungsverhältnis des Transformators gegeben ist.

Aber auch die Verbesserung des Wirkungsgrades des Gleichspannungswandlers übertrifft alle Erwartungen. Bei dem in Fig. 1 gezeigten Ausführungsbeispiel liegt er in einem gerätespezifisch weiten Funkenfrequenzbereich um über 60 %. Dieses bedeutet eine Verbesserung des Wirkungsgrades gegenüber dem bei einem herkömmlichen Gleichspannungswandler um den Faktor 1,5 bei Teillast und um den Faktor 2 bei Vollast. Diese Werte beziehen sich dabei auf einen bevorzugten Kapazitätswert von 3,3 nF für den Kondensator C1 bei dem in Fig. 1 gezeigten Hochspannungs-Kondensator-Zündgerät. wie dieses der Fig. 5 zu entnehmen ist, nimmt bei ansteigender Funkenfrequenz, d.h. kleiner werdendem t, die Ladespannung bis zum gemeinsamen "Schwenkpunkt" allmählich ab, um in gewollter weise bei etwa gleichblei-bendem hohen Wirkungsgrad den Leistungsdurchsatz des Gerätes nicht übermäßig ansteigen zu lassen.

Die in den Fig. 2 bis 4 dargestellten Ausführungsbeispiele des Gleichspannungswandlers, der hier ohne das in Fig. 1 dargestellte Zündgerät gezeigt wird, unterscheiden sich von dem in Fig. 1 gezeigten Ausführungsbeispiel des Gleichspannungswandlers durch unterschiedliche Anschlußvarianten für den Kondensator C1 und durch die Ausbildung der Sekundärwicklung W2 als nur eine wicklung, die keine Anzapfung aufweist.

Auch bei diesen Ausführungsformen des Gleichspannungswandlers ergibt sich noch ein Wirkungsgrad von ca. 60 % bei Teillast und von ca. 45 % bei Vollast.

Wie bereits vorstehend angegeben wurde, sind die einzelnen Ausführungsbeispiele des Gleichspannungswandlers nicht auf eine Verwendung in Hochspannungs-Kondensator-Zündgeräten beschränkt. Da bei einer im wesentlichen ohmschen Belastung des Gleichspannungswandlers ein Wirkungsgrad um 75 % zu erreichen ist, kann der Gleichspannungswandler universell überall dort eingesetzt werden, wo eine stark veränderliche Belastung mit Hochspannung bei hohem Wirkungsgrad zu speisen ist. Für unterschiedliche Anwendungen können dabei unterschiedliche rechnerische Übersetzungsverhältnisse des Transformators gewählt werden, wobei sich dann in Abhängigkeit von der Größe der primärseitigen Speisespannung $U_{Bat}$ die in Fig. 6 der Zeichnung dargestellten maximalen Ladespannungen am Ladekondensator des Gleichspannungswandlers ergeben.

Wie bereits anhand der Fig. 5 erläutert wurde, können je nach Anwendung und auch besonderer Auslegung z.B. von Kondensator-Zündgeräten unterschiedliche Verläufe der Ladekurven für den Ladekondensator gewählt werden. Dieses geschieht durch Änderung der Kapazität des Kondensators C1. Dieser wird daher vorzugsweise steckbar in die Schaltung des Gleichspannungswandlers eingebracht, um durch einfaches Austauschen des Kondensators das Betriebsverhalten des Gleichspannungswandlers in der gewünschten Weise einstellen zu können, ohne daß weitere Schaltungsänderungen erforderlich wären.

Durch die extrem hohe Spannungsausbeute an der Sekundärseite des Gleichspannungswandlers kann auch der Transformator XFMR einfach und kostensparend hergestellt werden. Die technischen Daten für einen solchen Transformator sind beispielsweise:

Kern: RM 14, 3 B 8, OL;

W2,1 = 90 x (0,35) zwei Lagen;

W2,2 = 45 x (0,35) eine Lage;

W1 = 9 x (2 x 0,85 Bifilar) eine Lage;

Die Wicklung W2,2 kann dabei mit dem gleichen Draht der Wicklung W2,1 in einem Zuge ohne umständlichen Drahtwechsel aufgebracht werden. Wie ersichtlich, ist die Herstellung des Transformators äußerst einfach. Dieses ist ein wesentlicher Vorteil, da Transformatoren in herkömmlichen Gleichspannungswandlern das kostenaufwendigste Teil darstellen dürften, so daß eine starke Vereinfachung dieses Bauteiles eine erhebliche Kostenminderung des Gleichspannungswandlers bewirkt. Aufgrund der niedrigen Windungszahlen wird außerdem der Raumbedarf gegenüber bisherigen Transformatoren halbiert. Dieses ermöglicht über die einfache Wickeltechnik des Transformators hinaus weitere Vorteile, wie z.B. die Verminderung der Bauhöhe des Transformators um die Hälfte der bisher benötigten Wicklungsbreite (18,4 mm), nämlich tatsächlich um 9 mm. Außerdem kann evtl. die nächstkleinere Kerngröße für den Transformator gewählt werden, wenn gleichzeitig die Frequenz des Gleichspannungswandlers erhöht wird. Bei gleichem effektiven magnetischen Querschnitt kann die magnetische Weglänge beträchtlich vermindert werden und auch das magnetische Volumen wird kleiner. Dieses kommt dem Wirkungsgrad des Transformators und damit zusätzlich dem des gesamten Gleichspannungswandlers weiterhin zugute.

Für die in der Zeichnung gezeigten Ausführungsbeispiele des Gleichspannungswandlers können die folgenden Bauelementgrößen benutzt werden:

R1 = 7 bis 10 Ohm, Bestwert 10 Ohm

C1 = 1 bis 10 nF, Bestwert 3,3 nF

ü = 14 bis 16, Bestwert 15, unterteilt in (10 + 5)

C3 = 0,5 uF.

Bei der Auslegung des elektronischen Schalters ES ist zu beachten, daß dieser Spannungsspitzen in der Größe des etwa vierfachen Wertes der primärseitigen Speisespannung $U_{Bat}$ gewachsen ist, der auch an der Primärwicklung W1 des Transformators XM FR auftritt.

**Patentansprüche**

1. Gleichspannungswandler mit einem eine Primärwicklung (W1) und mindestens eine Sekundärwicklung (W2; W2.1, W2.2) aufweisenden Transformator (XFMR), dessen Primärwicklung (W1) durch einen Impulsgenerator (ES, PWH) mit Gleichspannungsimpulsen gespeist wird und dessen mindestens eine Sekundärwicklung (W2; W2.1, W2.2) mit einem Brückengleichrichter (BR) verbunden ist, dessen Gleichspannungsausgänge mit einem Ladekondensator (C3) verbunden sind, **dadurch gekennzeichnet,** daß der mit der Sekundärwicklung (W2; W2.1, W2.2) verbundene Brückengleichrichter (BR) die Impulse des im Eintaktbetrieb arbeitenden Gleichspannungswandlers gleichrichtet und dadurch den Transformator (XFMR) auch entmagnetisiert und daß ein Anschluß (A, C) der mindestens einen Sekundärwicklung (W2) über einen Kondensator (C1) mit einem Schaltpunkt (E, G) verbunden ist, der wechselspannungsmäßig niedriges Potential führt, wobei die Kapazität des Kondensators (C1) klein gegenüber der Kapazität des Ladekondensators (C3) ist.

2. Gleichspannungswandler nach Anspruch 1, **dadurch gekennzeichnet,** daß der Minuspol (-) des Brückengleichrichters (BR) über einen Widerstand (R1) mit Erde verbunden ist.

3. Gleichspannungswandler nach Anspruch 1 oder 2, **dadurch gekennzeichnet,** daß die Sekundärwicklung (W2; W2.1, W2.2) durch eine Anzapfung (B) in erste und zweite Sekundärwicklungen (W2.1, W2.2) unterteilt ist, wobei die erste Sekundärwicklung (W2.1) mit dem Brückengleichrichter (BR) und die zweite Sekundärwicklung (W2.2) mit dem Kondensator (C1) verbunden ist und eine etwa halb so große Windungszahl wie die erste Sekundärwicklung (W2.1) hat.

4. Gleichspannungswandler nach Anspruch 3, **dadurch gekennzeichnet,** daß der Kondensator (C1) den freien Anschluß (C) der zweiten Sekundärwicklung (W2.2) mit Erde verbindet.

5. Gleichspannungswandler nach Anspruch 1 oder 2, **dadurch gekennzeichnet,** daß der Kondensator (C1) einen der Anschlüsse (A, C) der Sekundärwicklung (W2; W2.1, W2.2) mit dem Minuspol des Brückengleichrichters (BR) oder einem Anschluß (E) der Primärwicklung (W1) verbindet, der wechselspannungsmäßig niedriges Potential führt.

6. Gleichspannungswandler nach einem der Ansprüche 1 bis 5, **dadurch gekennzeichnet,** daß der Kondensator (C1) steckbar mit der Schaltung verbindbar ist und unterschiedliche Kapazitäten im Bereich von etwa 680 pF bis 10 nF, vorzugsweise von 3,3 nF, hat.

7. Gleichspannungswandler nach einem der Ansprüche 1 bis 6, **dadurch gekennzeichnet,** daß das Übersetzungsverhältnis zwischen Primär- und Sekundärwicklung (W1, W2; W2.1, W2.2) im Bereich von etwa 14 bis 16 und vorzugsweise bei 15 liegt.

8.  Gleichspannungswandler nach einem der Ansprüche 1 bis 7, **dadurch gekennzeichnet,** daß er zur Speisung eines Hochspannungs-Kondensator-Zündgerätes verwendet wird.

## Claims

1.  A d.c. converter comprising a transformer (XFMR) having a primary winding (W1) and at least one secondary winding (W2; W2.1, W2.2), its primary winding (W1) being fed with d.c. pulses by a pulse generator (ES, PWM), and its at least one secondary winding (W2; W2.1, W2.2) being connected to a bridge rectifier (BR), the d.c. outputs of which are connected to a charging capacitor (C3), characterised in that the bridge rectifier (BR) connected to the secondary winding (W2; W2.1, W2.2) rectifies the pulses of the single-stroke d.c. converter and thus also demagnetises the transformer (XFMR) and in that one connection (A, C) of the at least one secondary winding (W2) is connected via a capacitor (C1) to a junction point (E, G) which carries a low a.c. potential, the capacity of the capacitor (C1) being small relatively to the capacity of the charging capacitor (C3).

2.  A d.c. converter according to claim 1, characterised in that the negative terminal (-) of the bridge rectifier (BR) is earthed via a resistor (R1).

3.  A d.c. converter according to claim 1 or 2, characterised in that the secondary winding (W2; W2.1, W2.2) is divided by a tapping (B) into first and second secondary windings (W2.1, W2.2), the first secondary winding (W2.1) being connected to the bridge rectifier (BR) and the second secondary winding (W2.2) being connected to the capacitor (C1) and having approximately half as many turns as the first secondary winding (W2.1).

4.  A d.c. converter according to claim 3, characterised in that the capacitor (C1) connects the free connection (C) of the second secondary winding (W2.2) to earth.

5.  A d.c. converter according to claim 1 or 2, characterised in that the capacitor (C1) connects one of the connections (A, C) of the secondary winding (W2; W2.1, W2.2) to the negative terminal of the bridge rectifier (BR) or to one connection (E) of the primary winding (W1) having a low a.c. potential.

6.  A d.c. converter according to any one of claims 1 to 5, characterised in that the capacitor (C1) can be connected to the circuit by plugging in and has different capacities in the range from about 680 pF to 10 nF, preferably 3.3 nF.

7.  A d.c. converter according to any one of claims 1 to 6, characterised in that the transformation ratio between the primary and secondary windings (W1, W2; W2.1, W2.2) is in the range from about 14 to 16 and is preferably 15.

8.  A d.c. converter according to any one of claims 1 to 7, characterised in that it is used to supply a high-tension capacitor ignition device.

## Revendications

1.  Convertisseur continu-continu pourvu d'un transformateur (XFRM) comportant un primaire (W1) et au moins un secondaire (W2 ; W2.1, W2.2), dont le primaire (W1) est alimenté par un générateur d'impulsions (ES, PWM) en impulsions de tension continue et dont au moins un secondaire (W2 ; W2.1, W2.2) est relié à un redresseur à pont (BR) dont les sorties de tension continue sont reliées à un condensateur de charge (C3), caractérisé en ce que le redresseur à pont (BR) relié au secondaire (W2 ; W2.1, W2.2) redresse les impulsions du convertisseur continu-continu fonctionnant en mode à simple alternance et ainsi démagnétise aussi le transformateur (XFMR), et en ce qu'une borne (A, C) du secondaire (W2) au moins à un exemplaire est relié par l'intermédiaire d'un condensateur (C1) à un noeud (E, G) qui est le siège d'un bas potentiel ayant l'allure d'une tension alternative, la capacité du condensateur (C1) étant faible par rapport à la capacité du condensateur de charge (C3).

2.  Convertisseur continu-continu selon la revendication 1, caractérisé en ce que le pôle moins (-) du redresseur à pont (BR) est relié à la masse par l'intermédiaire d'une résistance (R1).

3.  Convertisseur continu-continu selon la revendication 1 ou 2, caractérisé en ce que le secondaire (W2 ; W2.1, W2.2) eSt subdivisé par un piquage (B) en un premier secondaire et un second secondaire (W2.1, W2.2), le premier secondaire (W2.1) étant relié au redresseur à pont (BR) et le second secondaire (W2.2) étant relié au condensateur (C1) et ayant un nombre de spires à peu près égal à la moitié de celui du premier secondaire (W2.1).

4. Convertisseur continu-continu selon la revendication 3, caractérisé en ce que le condensateur (C1) relie la borne libre (C) du second secondaire (W2.2) à la masse.

5. Convertisseur continu-continu selon la revendication 1 ou 2, caractérisé en ce que le condensateur (C1) relie l'une des bornes (A, C) du secondaire (W2 ; W2.1, W2.2) au pôle moins du redresseur à pont (BR) ou à une borne (E) du primaire (W1) qui est le siège d'un bas potentiel ayant l'allure d'une tension alternative.

6. Convertisseur continu-continu selon l'une des revendications 1 à 5, caractérisé en ce que le condensateur (C1) peut être relié par enfichage au circuit et a des capacités diverses dans l'intervalle d'environ 680 pF 10 nF, de préférence de 3,3 nF.

7. Convertisseur continu-continu selon l'une des revendications 1 à 6, caractérisé en ce que le rapport de transformation entre primaire et secondaire (W1, W2; W2.1, W2.2) est compris dans l'intervalle d'environ 14 à 16 et est de préférence, égal à 15.

8. Convertisseur continu-continu selon l'une des revendications 1 à 7, caractérise en ce qu'on l'utilise pour alimenter un dispositif d'allumage à condensateur à haute tension.

Fig. 1

Fig. 2

Fig. 3

Fig. 4

Fig. 5

$U_C$ [V]

Spannüngsbegrenzüng!

C1 = 33 nF
10nF
4,7nF
2,2nF
680pF
0 (nur Lagenkapazität zw. W2 und W1 !)

$U_{Bat.} = 13.8\ V;\ \ddot{u} = (10+5);\ R1 = 10\ \Omega;\ f_F = 10\ Hz$

$t = \dfrac{1}{f_F}\ [ms]$

EP 0 301 436 B1

**Fig. 6**

$U_C$ [V]

$ü = 19$

17

15

13

11

9

$R1 = 10\,\Omega;\ C1 = 4,7\,nF;\ C3 = 0,5\,\mu F;\ R3 = 1\,M\Omega$

$U_{Bat.}$ [V]

EP 0 301 436 B1